# EUROPÄISCHE PATENTSCHRIFT

(11) **EP 0 315 054 B1**
(45) Veröffentlichungstag und Bekanntmachung des Hinweises auf die Patenterteilung: **09.10.1996**
(21) Anmeldenummer: 88117906.3
(22) Anmeldetag: 27.10.1988
(51) Int. Cl.: G06F 11/00

(54) **Verfahren zum Überwachen eines einen Mikroprozessor überwachenden Watchdog-Timers und Vorrichtung zur Durchführung des Verfahrens**
Method for the supervision of watchdog timer supervising a microprocessor, and device for carrying out such a method
Procédé de surveillance d'un circuit de surveillance de temps de microprocesseur et dispositif pour la réalisation du procédé

(30) Priorität: 06.11.1987 DE 3737765; 05.08.1988 DE 3827021
(43) Veröffentlichungstag der Anmeldung: 10.05.1989
(73) Patentinhaber: Joh. Vaillant GmbH u. Co., D-42810 Remscheid (DE); n.v. Vaillant s.a., B-1620 Drogenbos (BE); VAILLANT S.A.R.L, F-94537 Rungis Cedex (FR); VAILLANT Ges.m.b.H, A-1233 Wien (AT); Vaillant Ltd., Rochester Kent ME2 4EZ (GB); Vaillant B.V., NL-1105 BJ Amsterdam (NL); Vaillant GmbH, CH-8953 Dietikon 1 (CH)
(72) Erfinder: Manz, Dietmar, D-5277 Marienheide (DE); Wertenbruch, Franz-Josef, D-5477 Neustadt Wied (DE)
(74) Vertreter: Heim, Johann-Ludwig, Dipl.-Ing.

(56) Entgegenhaltungen:
- WO-A-85/02042
- US-A- 3 749 897
- PATENT ABSTRACTS OF JAPAN, Band 8, Nr. 45 (P-257)[1482], 28. Februar 1984; & JP-A-58 195 261
- PATENT ABSTRACTS OF JAPAN, Band 10, Nr. 116, (P-452), 30. April 1986; & JP-A-60 243 749

## Beschreibung

Die vorliegende Erfindung bezieht sich auf ein Verfahren zum Überwachen eines einen Mikroprozessor überwachenden Watchdog-Timers sowie auf eine Vorrichtung zur Durchführung des Verfahrens gemäß den Oberbegriffen der unabhängigen Ansprüche 1 und 4.

Es ist bekannt, einem Mikrocomputer beispielsweise zur Steuerung einer brennstoffbeheizten Wärmequelle einen Watchdog-Timer zuzuordnen, der die Funktion des Mikroprozessors überwacht. Dies geschieht normalerweise mit Hilfe einer retriggerbaren monostabilen Kippstufe, die vom Programm des Mikrocomputers zyklisch Retrigger-Impulse erhält und im Falle des Ausbleibens dieser Impulse ein Rücksetzen des Mikrocomputers bewirkt, so daß dieser das von ihm überwachte Gerät neu in Betrieb nehmen muß.

Soll nun eine Mikrocomputersteuerung zum Beispiel in einem Umlaufwasserheizer auch sicherheitsrelevante Funktionen übernehmen, zum Beispiel die des Feuerungsautomaten, so ist eine Oberwachung der Funktionstüchtigkeit des Watchdog-Timers erforderlich.

Der vorliegenden Erfindung liegt daher die Aufgabe zugrunde, ein Verfahren anzugeben, mit dem diese Überwachung möglich ist. Darüber hinaus soll eine Vorrichtung aufgezeigt werden, die diese Oberwachung durchführt.

Die JP-A-58 195 261 (abstract) offenbart ein Verfahren, wobei der Test des Watchdogs durch einen manuellen Eingriff über einen Knopf gestartet wird. Die Reaktionszelt des Watchdogs wird nicht gemessen.

Die Lösung der Aufgabe liegt erfindungsgemäß darin, daß der Watchdog-Timer automatisch und zyklisch getestet wird, indem die Impulse des Mikroprozessors unterdrückt und die Zeit ab der Unterdrückung gemessen wird, bis der Watchdog-Timer einen Resetimpuls abgibt, und daß diese Zeit mit einem Toleranzzeitband verglichen wird, dessen kürzeste Zeit gleich oder größer ist als die Dauer zwischen zwei Impulsen des Mikroprozessors und dessen längere Zeit in Abhängigkeit der Fehlertoleranzzeit des von dem Mikroprozessor gesteuerten Systems gewählt ist.

Durch diese Ausgestaltung erreicht man den Vorteil, daß ein relativ einfach aufgebauter Watchdog-Timer auch in sicherheitsrelevanten Steuerungen eingesetzt werden kann. Es ergibt sich die Möglichkeit, die Mikroprozessorsteuerung in Zweikanalbauweise aufzubauen, weil hierbei ein Selbsttest in größeren Zeitabständen ausreicht. Ein Aufbau in Einkanalbauweise ist praktisch unmöglich, weil dann der Mikroprozessor mit dem permanenten Selbsttest ausschließlich beschäftigt wäre.

Weitere Ausgestaltungen und besonders vorteilhafte Weiterbildungen der Erfindung sind aus den übrigen Unteransprüchen ersichtlich.

Anhand der Figuren 1 bis 3 der Zeichnung wird im folgenden ein Ausführungsbeispiel des erfindungsgemäßen Verfahrens und der Vorrichtung näher erläutert.

Es zeigen:
Figur 1 ein Prinzipschaltbild eines Umlaufwasserheizers,
Figur 2 ein Blockschaltbild und
Figur 3 ein Diagramm.

Vorab soll darauf hingewiesen werden, daß die erwähnten Bauelemente sowohl Einzelbauelemente in Digital- oder Analogtechnik sein könnten, Beispiel: die bistabile Kippstufe, die in Analogtechnik als RC-Glied ausgebildet sein könnte, aber auch Teile eines Mikroprozessors selbst sein könnten. Die bistabile Kippstufe könnte beispielsweise als Zähler dargestellt werden, der mit dem Anstoßimpuls zu zählen beginnt und nach Erreichen seiner eingestellten Schaltschwelle sich selbst wieder zurücksetzt und den Resetimpuls abgibt.

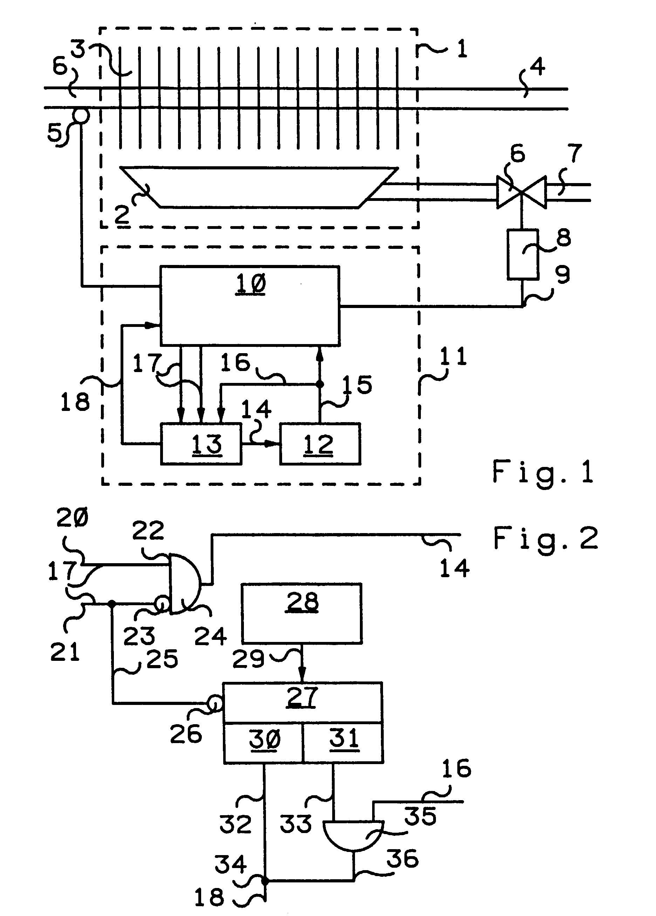

Ein Umlaufwasserheizer 1 weist im wesentlichen einen von einem Brenner 2 beheizten Wärmetauscher 3 auf, der an eine Rücklaufleitung 4 und eine mit einem Temperaturfühler 5 versehene Vorlaufleitung 6 angeschlossen ist. Der Brenner 2 wird aus einer mit einem Magnetventil 6 versehenen Gasleitung 7 gespeist. Eine Spule 8 des Magnetventils wird über eine Ausgangsleitung 9 einer Steuer- und Regeleinheit 10 gesteuert, wobei letztere Teil einer Mikroprozessoreinheit 11 ist. Die Mikroprozessoreinheit weist neben der Steuer- und Regeleinheit einen Watchdog-Timer 12 und eine Watchdog-Timer-Überwachungseinheit 13 auf, die beide über eine Leitung 14 miteinander verbunden sind. Der Watchdog-Timer ist über eine Leitung 15 mit der Steuer- und Regeleinheit verbunden. Parallel hierzu besteht eine Leitung 16, die die Leitung 15 zurück mit der Watchdog-Überwachungseinheit verbindet. Es ist ein Leitungsbündel 17 als Verbindung von der Steuer- und Regeleinheit zur Watchdog-Überwachungseinheit vorgesehen, eine weitere Leitung 18 zurück von der Watchdog-Überwachungseinheit zur Steuer- und Regeleinheit. Gemäß Figur 2 besteht das Leitungsbündel 17 aus wenigstens zwei Leitungen 20 und 21, die zu zwei Eingängen 22 und 23 (negiert) eines Und-Gliedes 24 führen, dessen Ausgang die Leitung 14 bildet. Die zu dem negierten Einang 23 führende Leitung 21 ist über eine Leitung 25 mit einem negierten Löscheingang 26 eines Zählers 27 verbunden. An den Zähler ist ein Oszillator 28 über eine Leitung 29 angeschlossen. Dem Zähler zugeordnet sind zwei Vergleichsstufen V₁ beziehungsweise V₂ mit den Bezugszeichen 30 und 31. Ausgänge 32 und 33 der Vergleichsstufen V₁ und V₂ sind vorgesehen. Der Ausgang 32 führt zu einem Verzweigungspunkt 34, von dem die Leitung 18 abgeht. Die Leitung 16 ist zusammen mit dem Ausgang 33 auf zwei Eingänge eines Und-Gliedes 35 geführt, dessen Ausgang 36 mit der Verzweigung 34 verbunden ist.

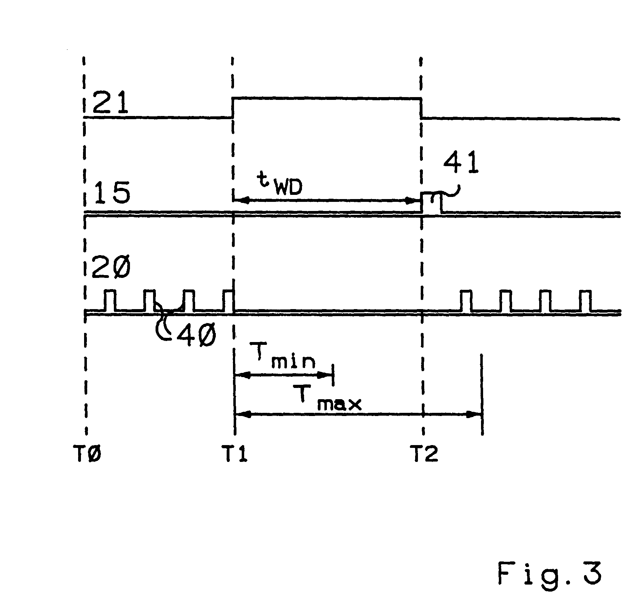

Zur Funktion der Anordnung nach den Figuren 1 und 2 ist nunmehr die Figur 3 zu vergleichen, die ein Diagramm zeigt.

Es sind Spannungsverläufe auf den Leitungen 15, 20, 21 als Funktion der Zeit aufgetragen.

Die Mikroprozessoreinheit 11 überwacht den Umlaufwasserheizer 1 in allen seinen Funktionen. Hierzu zählen insbesondere die Aufgabe als Flammenwächter, als Zünder und als Temperaturregel- und -steuereinrichtung. Neben der Steuer- und Regeleinheit 10, in die diese Funktionen alle integriert sind, ist auch der Watchdog-Timer 12 zu überwachen, und zwar von der Watchdog-Überwachungseinheit 13. Hierzu ist vorgesehen, daß die Steuer- und Regeleinheit 10 fortlaufend Impulse 40 erzeugt, die einen bestimmten Abstand voneinander aufweisen. Der Abstand dieser Impulse 40 hängt vom Programm ab. Diese Impulse erscheinen auf der Leitung 20 und werden über den Eingang 22 dem Und-Glied 24 zugeführt. Auf der Leitung 21 werden von der Steuer- und Regeleinheit 10 in bestimmten Abständen Testimpulse abgegeben, die auf der Leitung 21 erscheinen. Diese Impulse schließen zwischen sich eine Zeit von nahezu 24 Stunden ein. Diese Zeit beruht darauf, daß bei einem fortlaufenden Betrieb der Wärmequelle 1 über 24 Stunden hinaus definitionsgemäß ein Dauerbetrieb vorliegt, der zu unterbrechen ist, will man nicht besondere Sicherheits- und Überwachungsfunktionen auf sich nehmen. Immer wenn auf der Leitung 21 kein Impuls vorliegt, läßt das Und-Glied 24 infolge des negierten Eingangs 23 die Impulse auf der Leitung 20 durch und gibt sie auf die Leitung 14, das heißt, der Watchdog-Timer wird mit diesen Impulsen beaufschlagt. Dieser Zustand ist zwischen den Zeitpunkten T₀ und T₁ dargestellt. Zum Zeitpunkt T₁ wird der eben erwähnte Testimpuls auf der Leitung 21 erzeugt, das heißt, die Weitergabe der Impulse 40 auf der Leitung 14 an den Watchdog-Timer unterbleibt. Damit läuft die im Watchdog-Timer 12 vorgesehene monostabile Kippstufe weiter, bis die in ihr eingestellte Zeit abgelaufen ist. Das ist zum Zeitpunkt T₂ der Fall, die Ablaufzeit der monostabilen Kippstufe ist mit t_{WD} bezeichnet, sie entspricht dem Zeitraum zwischen den Zeitpunkten T₁ und T₂. Nach Ablauf dieser Zeit erzeugt der Watchdog-Timer auf der Leitung 15 ein Resetsignal, was sowohl der Watchdog-Überwachungseinheit 13 wie auch der Steuer- und Regeleinheit 10 zugeführt ist. Als Folge von letzterem wird die gesamte Steuer- und Regeleinheit 10 zurückgesetzt, das bedeutet, daß die brennstoffbeheizte Wärmequelle 1 außer Betrieb geht und im Rahmen eines neuen Programmzyklus wird sie bei Bestehen eines Wärmeanforderungssignals sofort wieder in Betrieb gehen. Parallel hierzu wird die Ablaufzeit der monostabilen Kippstufe mit einem Zeittoleranzband verglichen, was aus einer Mindestzeit und einer Maximumzeit zusammengesetzt ist. Die beiden Zeiten sind als Tₘᵢₙ und Tₘₐₓ, beginnend vom Zeitpunkt T₁, in der Figur 3 dargestellt. Die Größe der Minimalzeit Tₘᵢₙ ist so gewählt, daß sie größer ist als der Abstand zweier Impulse 40. Die maximale Zeit Tₘₐₓ ist in Abhängigkeit von der Fehlertoleranzzeit des von dem Mikroprozessor gesteuerten Systems gewählt. Im Falle eines Umlaufwasserheizers entspricht diese Zeit der Zeit, um die die Sicherheitszeit von 10 Sekunden maximal verlängert werden darf. Unter Sicherheitszeit wird die Zeit verstanden, für die das Gasventil 6 bei einem Zündversuch im Maximum freigegeben wird, wenn keine Flamme gemeldet wird. In Normungsentwürfen ist man bestrebt, die Fehlertoleranzzeit auf 1 bis 2 Sekunden festzuschreiben. Der Abstand zweier Impulse 40 beträgt 100 ms, die Zeit Tₘᵢₙ ist zu 200 ms gewählt worden.

Der Vergleich geschieht wie folgt:

Im Moment T₁ wird über die Leitung 25 der Zähler 27 freigegeben, so daß er mit dem Zählen beginnt. Seine Rücksetzung auf Null erfolgte früher. Er zählt nunmehr die über die Leitung 29 vom Oszillator 28 ausgesendeten Impulse. In den Vergleichsstufen V₁ und V₂ sind die Zeiten Tₘᵢₙ und Tₘₐₓ als Zählerstände gespeichert. Der Vergleicher V₁ vergleicht, ob die in ihm eingestellte Zeit größer als die dem Zählerstand des Zählers 27 entsprechende Zeit ist, und die Vergleichsstufe V₂ vergleicht, ob die in ihr eingestellte Zeit einem Zählerstand des Zählers 27 entspricht, die kleiner als die dort vorliegende Zeit ist. Die Zeit Tₘₐₓ entspricht dem Zählerstand der Vergleichsstufe V₁, die Zeit Tₘᵢₙ dem Zählerstand der Vergleichsstufe V₂. Nunmehr kann nach Ablauf der Zeit der monostabilen Kippstufe im Zeitpunkt T₂ festgestellt werden, ob der zu diesem Zeitpunkt herrschende Zählerstand des Zählers 27 gleich oder größer Tₘᵢₙ ist beziehungsweise gleich oder kleiner als Tₘₐₓ ist. Als Ergebnis dieses Vergleichs erscheint, wenn die Rücksetzzeit der monostabilen Kippstufe größer ist als die Zeit Tₘᵢₙ, aber kleiner ist als die Zeit Tₘₐₓ, kein Ausgangsimpuls. Ist die Zeit hingegen kleiner als Tₘᵢₙ, wird das Und-Glied 35 dann aktiviert, wenn zugleich auf der Leitung 16 ein Resetimpuls 41 gegeben wurde. Dann erfolgt über die Leitung 18 eine Störungsmeldung. In diesem Fall erfolgte die Resetmeldung zu früh. Ist die Rückstellzeit der monostabilen Kippstufe hingegen größer als die Maximumzeit Tₘₐₓ, dann erfolgt die Störungsmeldung auf der Leitung 18 an die Steuer- und Regeleinheit 10, verbunden mit einem Abschalten der brennstoffbeheizten Wärmequelle 1.

Abschließend soll darauf hingewiesen werden, daß die Funktion gemäß dem Blockschaltbild der Figur 2 auch als Software-Programm im Mikroprozessor implementiert werden kann.

Als Watchdog-Timer ist die Überwachungsschaltung anzusehen, die in regelmäßigen Zeitabständen prüft, ob eine von ihr überwachte Schaltung arbeitet beziehungsweise ob ein Programmablauf erfolgt.

## Patentansprüche

1. Verfahren zum Überwachen eines einen Mikroprozessor überwachenden Watchdog-Timers, der aus einer von Impulsen des Mikroprozessors gesteuerten monostabilen Kippstufe besteht, dadurch gekennzeichnet, daß der Watchdog-Timer (12) automatisch und zyklisch getestet wird, indem die Impulse (40) des Mikroprozessors (11) unterdrückt und die Zeit (t_{WD}) ab der Unterdrückung (T₁) gemessen wird, bis der Watchdog-Timer einen Resetimpuls (41) abgibt, und daß diese Zeit (t_{WD}) mit einem Toleranzband (Tₘₐₓ - Tₘᵢₙ) verglichen wird, dessen kürzeste Zeit (Tₘᵢₙ) gleich oder größer ist als die Dauer zwischen zwei Impulsen (40) des Mikroprozessors und dessen längere Zeit in Abhängigkeit der Fehlertoleranzzeit des von dem Mikroprozessor gesteuerten Systems gewählt ist.

2. Verfahren nach Anspruch 1, dadurch gekennzeichnet, daß eine Fehlermeldung abgegeben wird, wenn die gemessene Zeit (t_{WD}) nicht innerhalb des Toleranzbandes liegt.

3. Verfahren nach Anspruch 1, dadurch gekennzeichnet, daß gleichfalls eine Fehlermeldung abgegeben wird, wenn der Resetimpuls (41) erst nach Ablauf der größeren Zeit (Tₘₐₓ), oder überhaupt nicht abgegeben wird.

4. Vorrichtung zur Durchführung des Verfahrens nach einem der Ansprüche 1 bis 3, dadurch gekennzeichnet, daß eine Watchdog-Überwachungseinrichtung (13) vorgesehen ist, die aus einem einem Zähler (27) zugeordneten Oszillator (28) besteht, wobei zum Vergleich des Zählerstandes mit den Zeiten (Tₘᵢₙ/Tₘₐₓ) zwei Vergleichsstufen (V₁ und V₂) vorgesehen sind, von denen die eine direkt mit einer Störungsmeldeleitung (18) und die andere mit einem Und-Glied (35) verbunden ist, dessen anderer Eingang (16) Resetimpulse (41) führt, und daß der Ausgang (36) dieses Und-Gliedes (35) mit der Störungsmeldeleitung (18) verbunden ist.

## Claims

1. Procedure for the supervision of a watchdog timer supervising a microprocessor; the watchdog timer consists of a monostable flip-flop connection controlled by pulses of the microprocessor, characterized by the fact that the watchdog timer (12) is automatically and cyclically tested by the suppression of the pulses (40) of the microprocessor (11) and by measuring the time (t_{wd}) as of the suppression (T₁) until the watchdog timer generates a reset pulse (41) and that this time (t_{wd}) is compared to a tolerance range (Tₘₐₓ - Tₘᵢₙ) the shortest period (Tₘᵢₙ) of which is equal to or longer than the period between two pulses (40) of the microprocessor and the longer period of which is selected by the microprocessor-controlled system as a function of the fault tolerance time.

2. Procedure according to claim 1, characterized by the fact that a fault is signalled if the measured time (t_{wd}) is not within the tolerance range.

3. Procedure according to claim 1, characterized by the fact that a fault is signalled as well if the reset pulse (41) is not generated until the longer period (Tₘₐₓ) has expired or not generated at all.

4. Device for the execution of the procedure according to one of the claims 1 to 3, characterized by the fact that a watchdog supervision device (13) is provided which consists of an oscillator (28) allocated to a meter (27), two reference points (V₁ and V₂) being provided for the comparison of the count of the meter with the periods (Tₘᵢₙ, Tₘₐₓ), one of them being directly connected with a fault signalling line (18) and the other with an AND element (35), the other inlet (16) of which conducts reset pulses (41) and that the outlet (36) of this AND element is connected with the fault signalling line (18).

## Revendications

1. Procédé pour le contrôle d'une horloge de watch-dog surveillant un microprocesseur, laquelle se compose d'une bascule monostable actionnée par des impulsions du microprocesseur, procédé caractérisé par le fait que l'horloge de watch-dog (12) est testée automatiquement et par cycle, les impulsions (40) du microprocesseur (il) étant supprimées et le temps (t_{WD}) depuis la suppression (T₁), mesuré, jusqu'à ce que l'horloge de watch-dog émette un signal de remise à zéro (41), et que ce temps (t_{WD}) est comparé avec une bande de tolérance (Tₘₐₓ - Tₘᵢₙ) dont le temps le plus court (Tₘᵢₙ) est égal ou supérieur à la pause entre deux impulsions (40) du microprocesseur, et dont le temps le plus long est défini en fonction du temps d'erreur tolérée du système commandé par le microprocesseur.

2. Procédé suivant la revendication 1, caractérisé par le fait qu'un signal d'erreur est émis lorsque le temps mesuré (t_{WD}) ne se situe pas à l'intérieur de la bande de tolérance.

3. Procédé suivant la revendication 1, caractérisé par le fait qu'un signal d'erreur est également émis lorsque le signal de remise à zéro (41) n'est émis qu'après écoulement du temps long (Tₘₐₓ) ou pas du tout.

4. Dispositif pour l'application du procédé suivant l'une des revendications 1 à 3, caractérisé par le fait qu'il est prévu un organe de contrôle (13) comprenant un oscillateur (28) coopérant avec un compteur (27), deux étages comparateurs (V₁ et V₂) étant prévus pour comparer la position du compteur avec les temps (Tₘᵢₙ/Tₘₐₓ), étages dont l'un est relié directement à une ligne de signalisation de pannes (18), et l'autre, à un circuit ET (35) dont l'autre entrée (16) reçoit des signaux de mise à zéro (41), et que la sortie (36) dudit circuit ET (35) est reliée à la ligne (18).
